(19) **Europäisches Patentamt / European Patent Office / Office européen des brevets**

(11) **EP 2 119 147 B1**

(12) **FASCICULE DE BREVET EUROPEEN**

(45) Date de publication et mention
de la délivrance du brevet:
**22.08.2018 Bulletin 2018/34**

(21) Numéro de dépôt: **08762003.5**

(22) Date de dépôt: **29.01.2008**

(51) Int Cl.:
**H04W 40/22** *(2009.01)*

(86) Numéro de dépôt international:
**PCT/FR2008/050142**

(87) Numéro de publication internationale:
**WO 2008/110715 (18.09.2008 Gazette 2008/38)**

(54) **PROCÉDÉS ET DISPOSITIFS DE DÉCOUVERTE D'UNE PASSERELLE ET DE ROUTAGE VERS CETTE PASSERELLE DANS UN RÉSEAU SANS FIL HYBRIDE**

VERFAHREN UND VORRICHTUNG ZUR ERKENNUNG EINES GATEWAYS UND ZUR WEITERLEITUNG ZU DIESEM GATEWAY IN EINEM DRAHTLOSEN HYBRIDNETZWERK

METHODS AND DEVICES FOR DISCOVERING A GATEWAY AND FOR ROUTING TOWARDS SAID GATEWAY IN A HYBRID WIRELESS NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.02.2007 FR 0753307**

(43) Date de publication de la demande:
**18.11.2009 Bulletin 2009/47**

(73) Titulaire: **Orange
75015 Paris (FR)**

(72) Inventeurs:
• **JAVAID, Usman
Newbury RG14 1JL (GB)**
• **MEDDOUR, Djamal-Eddine
F-22300 Lannion (FR)**

(74) Mandataire: **Delumeau, François Guy et al
Cabinet Beau de Loménie
158, rue de l'Université
75340 Paris Cedex 07 (FR)**

(56) Documents cités:
**WO-A-02/054646**

• **WEI H-Y ET AL: "TWO-HOP-RELAY ARCHITECTURE FOR NEXT-GENERATION WWAN/WLAN INTEGRATION" IEEE WIRELESS COMMUNICATIONS, IEEE SERVICE CENTER, PISCATAWAY, NJ, US, vol. 11, no. 2, avril 2004 (2004-04), pages 24-30, XP001196396 ISSN: 1536-1284**
• **AMOURIS K N ET AL: "A position-based multi-zone routing protocol for wide area mobile ad-hoc networks" VEHICULAR TECHNOLOGY CONFERENCE, 1999 IEEE 49TH HOUSTON, TX, USA 16-20 MAY 1999, PISCATAWAY, NJ, USA,IEEE, US, vol. 2, 16 mai 1999 (1999-05-16), pages 1365-1369, XP010342087 ISBN: 0-7803-5565-2**

## Description

Arrière-plan de l'invention

L'invention se rapporte au domaine du routage dans les réseaux de télécommunication ad hoc.

Un réseau de télécommunication ad hoc est un réseau dans lequel des équipements mobiles appelés « noeuds » sont libres de se déplacer et de communiquer sans fil les uns avec les autres.

Ces réseaux ont l'avantage d'être très flexibles, chaque mobile étant adapté à router le trafic afin de créer des chemins entre les noeuds.

Mais il est très difficile de mettre en oeuvre un routage efficace dans un réseau ad hoc comportant un nombre important de noeuds.

Une des approches connues pour résoudre ce problème de mise à l'échelle (en anglais « scalability »), consiste à intégrer les réseaux ad hoc avec les réseaux fixes, par exemple de type Internet (en anglais « IP networks »).

On parle de « réseau hybride ».

De façon connue, un réseau hybride est donc principalement composé de réseaux ad hoc reliés entre eux par un réseau d'infrastructure fixe, l'interface entre un réseau ad hoc et le réseau d'infrastructure fixe étant réalisée par des équipements connus indifféremment sous le nom de « passerelle » ou de « point d'accès ».

Lorsqu'un message doit être routé entre deux noeuds d'un réseau ad hoc, le meilleur chemin entre ces noeuds est déterminé, ce chemin pouvant ou non passer par la passerelle.

Dans un réseau de télécommunication hybride se pose, pour les noeuds du réseau ad hoc désirant accéder au réseau d'infrastructure fixe, le problème de découverte de la passerelle.

Dans un schéma dit « proactif », la passerelle diffuse périodiquement des messages d'annonce à travers le réseau ad hoc pour fournir aux noeuds de ce réseau des informations permettant d'identifier un chemin vers la passerelle. Ces schémas proactifs offrent une bonne connectivité, mais ont souvent été critiqués en ce qu'ils occupent inutilement de la bande passante dans le réseau ad hoc, notamment lorsque certains noeuds n'ont pas besoin de connectivité avec le réseau fixe.

Dans un schéma dit « réactif », seuls les noeuds ayant besoin d'accéder au réseau d'infrastructure fixe, cherchent à identifier la passerelle, en diffusant un message de sollicitation dans le réseau. Dans ce schéma, la bande passante est mal utilisée lorsqu'un nombre important des noeuds requièrent une connectivité avec le réseau fixe.

On connaît également des « schémas hybrides » qui tirent parti des avantages des schémas proactif et réactif. Dans ces schémas, la passerelle diffuse périodiquement les messages d'annonce mais contrairement au cas des schémas proactifs, ces messages ne sont pas diffusés dans tout le réseau, mais seulement jusqu'à une profondeur déterminée comptée en nombre de sauts à partir de la passerelle.

Un premier problème consiste à déterminer cette profondeur et l'intervalle de temps entre deux diffusions successives du message d'annonce.

Par ailleurs, on comprend que les noeuds mobiles situés à proximité, et plus particulièrement ceux situés à un saut de la passerelle, sont fortement sollicités par le trafic entre les autres noeuds du réseau et l'infrastructure fixe.

Cela présente un inconvénient majeur lorsque ces noeuds n'ont pas la capacité suffisante pour supporter ce trafic. Le document "IEEE wireless communications, two-hop-relay architecture for next-generation WWAN/WLAN intégration" décrit un procédé de gestion d'un réseau de télécommunication hybride, pouvant être mis en oeuvre par une passerelle entre un réseau ad hoc et un réseau fixe; ce procédé comportant une étape de sélection parmi des noeuds candidats dudit réseau ad hoc situés à un saut de ladite passerelle; et ayant une connectivité avec ladite passerelle supérieure à un seuil prédéterminé; d'au moins un noeud dit noeud passerelle pour relayer au moins une partie du trafic entre d'autres noeuds du réseau ad hoc et ladite passerelle.

Objet et résumé de l'invention

L'invention est définie selon les revendications indépendantes 1, 5, 6, 7, 8, 13. Modes de réalisations sont définis selon les revendications dépendantes. Selon un premier aspect, l'invention concerne un procédé de découverte d'une passerelle et de routage de données vers cette passerelle, cette passerelle étant entre un réseau ad hoc et un réseau fixe dans un réseau de télécommunication hybride. Ce procédé comporte une étape de sélection, parmi des noeuds candidats du réseau ad hoc situés à un saut de la passerelle et ayant une connectivité supérieure à un seuil prédéterminé avec la passerelle, d'au moins un noeud dit « noeud passerelle » pour relayer au moins une partie du trafic entre d'autres noeuds du réseau ad hoc et la passerelle.

L'invention définit ainsi le concept de « noeud passerelle », à savoir des noeuds mobiles du réseau ad hoc, situés à un saut de la passerelle, ayant une bonne connectivité avec cette passerelle, et candidats pour relayer au moins une partie du trafic entre les autres noeuds du réseau ad hoc et la passerelle, notamment lorsque ces autres noeuds génèrent du trafic avec le réseau d'infrastructure fixe.

Dans un mode particulier de réalisation de l'invention, on considère qu'un noeud a une bonne connectivité avec la passerelle, lorsque le rapport signal/bruit mesuré par ce noeud sur des messages spécifiques (en anglais « beacon ») émis par la passerelle est supérieur à un seuil prédéterminé.

Conformément à l'invention, la sélection des noeuds passerelles peut être centralisée ou distribuée.

Dans un mode centralisé, les noeuds désirant être enregistrés comme noeuds passerelles envoient un message à la passerelle qui accepte ou rejette cette demande.

Dans un mode distribué, l'accord de la passerelle n'est pas nécessaire.

Dans un mode particulier de réalisation, une fois qu'un noeud passerelle est sélectionné, ce noeud est enregistré dans une table topologique de la passerelle.

Dans un mode particulier de réalisation de l'invention, le procédé de découverte et de routage comporte :

- une étape de diffusion, par la passerelle, uniquement à destination du ou des noeud(s) passerelle(s), d'un message d'annonce comportant une route vers cette passerelle ; et
- une étape de rediffusion du message d'annonce de proche en proche dans le réseau ad hoc par chacun des noeuds recevant ce message au moins jusqu'à une profondeur fixée par la passerelle et définissant une zone proactive du réseau.

On définit ainsi, comme dans l'art antérieur une zone proactive du réseau ad hoc, définie par une profondeur, à savoir un nombre de sauts, connue sous l'acronyme TTL, dans laquelle les messages d'annonce sont diffusés.

Mais, conformément à l'invention, ces messages d'annonce ne sont pas diffusés par la passerelle à tous ses voisins, mais seulement aux noeuds passerelles. On préserve ainsi les autres voisins de la passerelle du trafic généré par les noeuds du réseau ad hoc lorsqu'ils accèdent au réseau d'infrastructure fixe.

Comme on l'a vu précédemment, il n'existe pas de valeur optimale pour cette profondeur TTL.

Aussi, dans un mode particulier de réalisation, le procédé de découverte et de routage selon l'invention comporte une étape d'extension de la zone proactive, au cours de laquelle au moins un noeud du réseau ad hoc rediffuse le message d'annonce, si ce noeud connaît au moins une source active dans le réseau ad hoc séparée de la passerelle par un nombre de sauts supérieur à la profondeur.

Ce procédé permet très avantageusement de diffuser le message d'annonce, de proche en proche, vers toutes les sources actives, mêmes si celles-ci sont hors de la zone proactive.

Dans un mode particulier de réalisation de l'invention, un noeud du réseau devient une « source active » dès lors qu'il commence à émettre des données vers la passerelle, et perd ce caractère s'il ne communique plus avec la passerelle pendant une durée prédéterminée.

Dans un mode particulier de réalisation de l'invention, chaque noeud intermédiaire qui transmet des données émises par une source active vers la passerelle tient à jour la liste des sources actives du réseau et le nombre de sauts qui séparent cette source active de la passerelle.

Par exemple, si la profondeur TTL initialement fixée par la passerelle est 3, un noeud de la zone proactive connaissant l'existence d'une source active située à 5 sauts de la passerelle, rediffuse le message d'annonce afin d'étendre la zone proactive jusqu'à couvrir cette source.

Dans un mode préféré de réalisation de l'invention, au cours de l'extension de la zone proactive, le message d'annonce est uniquement envoyé aux noeuds aptes à établir un chemin vers une source active, ceci dans le but d'une meilleure gestion de la bande passante dans le réseau ad hoc.

Dans un mode particulier de réalisation, le procédé de découverte et de routage selon l'invention comporte une étape de détermination de la profondeur par la passerelle, afin de maximiser un gain prenant en compte le nombre de sources actives dans la zone proactive, et un critère de coût.

Dans ce mode de réalisation, la passerelle maintient une information topologique sur le nombre de noeuds connectés et la profondeur de chacun de ces noeuds. Elle peut ainsi déterminer pour chaque profondeur t possible, le nombre de noeuds $N_c(t)$ dans la zone proactive de profondeur t.

La passerelle peut ensuite choisir la profondeur TTL optimale, en maximisant le gain $\delta(t)$ défini par le rapport entre le nombre $S_c(t)$ de sources actives situées dans la zone proactive de profondeur t et un coût $C_f(t)$ de maintien de cette zone proactive.

Dans un exemple de réalisation, le coût de maintien de la zone proactive est égal à la somme des coûts de maintien de chacune des sources actives dans cette zone.

Dans un mode particulier de réalisation, le coût de maintien d'une source active est égal au nombre de sauts qui séparent cette source active de la passerelle.

Dans un mode particulier de réalisation de l'invention, le procédé de découverte et de routage comporte une étape au cours de laquelle la passerelle attend, entre deux diffusions successives du message d'annonce, une durée calculée par la passerelle en prenant en compte l'activité et la mobilité des noeuds du réseau ad hoc.

L'activité Ai dans le réseau peut être définie par le rapport entre le nombre S de sources actives et le nombre total N de noeuds dans le réseau ad hoc.

La mobilité Mi peut être définie par le rapport entre le nombre M de noeuds s'étant déplacés dans le réseau ad hoc pendant un intervalle de temps et le nombre N total de noeuds. Les noeuds qui rejoignent ou quittent le réseau ad hoc pendant cette période peuvent aussi être considérés comme des noeuds mobiles.

Dans un mode particulier de réalisation, le procédé de découverte et de routage selon l'invention comporte une étape d'ajustement de la profondeur TTL par la passerelle, pour satisfaire au moins une règle visant à mieux répartir le trafic entre la passerelle et au moins une autre passerelle voisine.

Cette règle peut faire partie d'une politique plus générale de gestion du réseau hybride.

Dans un mode particulier de réalisation, le réseau hybride comporte, dans son infrastructure fixe, une entité en charge de la mise en oeuvre de cette politique, apte à assurer une bonne répartition du trafic entre les différentes passerelles (en anglais « load balancing »).

Dans ce schéma, cette entité peut envoyer un message à une passerelle pour lui demander d'étendre ou de réduire la zone proactive, ce qui se traduit par une réduction ou une augmentation de la profondeur.

On comprend par ailleurs que les noeuds de la zone proactive sont soumis à un trafic supérieur aux autres du fait qu'ils doivent router le trafic entre les noeuds du réseau ad hoc et le réseau fixe.

Il est donc important, pour que les utilisateurs de ces équipements acceptent de rendre ce service, de les rémunérer d'une façon ou d'une autre.

Cette politique de rémunération a un coût que l'opérateur vise à minimiser.

A cet effet, dans un mode particulier de réalisation, le procédé de découverte et de routage selon l'invention comporte une étape au cours de laquelle la passerelle diminue la profondeur et une durée entre deux diffusions successives du message d'annonce si l'activité des noeuds du réseau ad hoc diminue.

En pratique, il est fréquent que plusieurs noeuds passerelles soient sélectionnés.

En conséquence un noeud du réseau ad hoc reçoit le message d'annonce émis par la passerelle en provenance de plusieurs noeuds passerelles.

Dans un mode particulier de réalisation, le procédé de découverte et de routage selon l'invention comporte une étape au cours de laquelle un noeud du réseau ad hoc ayant reçu plusieurs desdits messages d'annonce renonce à la rediffusion d'au moins un de ces messages d'annonce si celui-ci est reçu en provenance d'un noeud passerelle offrant une qualité de service relativement faible.

Les noeuds passerelles offrant une qualité de service diminuée à un instant donné sont ainsi soulagés.

Dans un mode particulier de réalisation, le procédé de découverte et de routage selon l'invention comporte :

- une étape au cours de laquelle le noeud passerelle insère dans le message d'annonce une mesure de la qualité du lien entre ce noeud passerelle et la passerelle ;
- une étape de maintien, par au moins un des noeuds d'une mesure représentative de la qualité d'au moins certains chemins existant entre ce noeud et un noeud passerelle; et
- une étape de sélection, par ce noeud, en fonction de ces mesures, de l'un des chemins, pour router le trafic entre ce noeud et la passerelle.

Chaque noeud peut ainsi choisir le meilleur chemin pour router du trafic émis par une source active vers la passerelle en prenant en compte la qualité du lien entre le noeud passerelle et la passerelle et la qualité du chemin qui le sépare de ce noeud passerelle.

On gère ainsi la qualité de service de bout en bout.

Selon un deuxième aspect, l'invention concerne une passerelle pouvant être utilisée dans un réseau de télécommunication hybride entre un réseau ad hoc et un réseau fixe. Elle comporte des moyens de sélection, parmi des noeuds candidats du réseau ad hoc situés à un saut de la passerelle et ayant une connectivité avec cette passerelle supérieure à un seuil prédéterminé, d'au moins un noeud dit « noeud passerelle » pour relayer au moins une partie du trafic entre d'autres noeuds du réseau ad hoc et cette passerelle.

Corrélativement, l'invention vise aussi un procédé de gestion d'un réseau de télécommunication hybride, pouvant être mis en oeuvre par une passerelle entre un réseau ad hoc et un réseau fixe. Ce procédé de gestion comporte une étape de sélection parmi des noeuds candidats du réseau ad hoc situés à un saut de la passerelle et ayant une connectivité avec cette passerelle supérieure à un seuil prédéterminé, d'au moins un noeud dit « noeud passerelle » pour relayer au moins une partie du trafic entre d'autres noeuds du réseau ad hoc et cette passerelle.

Les avantages et caractéristiques particulières de la passerelle et du procédé de gestion selon l'invention sont les mêmes que ceux mentionnés précédemment.

Ainsi, dans un mode particulier de réalisation, le procédé de gestion selon l'invention comporte une étape de diffusion uniquement à destination du ou des noeud(s) passerelle(s), d'un message d'annonce comportant une route vers la passerelle.

Dans un mode particulier de réalisation, le procédé de gestion selon l'invention comporte une étape de détermination de la profondeur, afin de maximiser un gain prenant en compte le nombre de sources actives dans la zone proactive, et un critère de coût.

Dans un mode particulier de réalisation, le procédé de gestion selon l'invention comporte une étape de calcul d'une durée prenant en compte l'activité et la mobilité des noeuds du réseau ad hoc, et une étape d'attente de cette durée entre deux diffusions successives du message d'annonce.

Dans un mode particulier de réalisation, le procédé de gestion selon l'invention comporte une étape d'ajustement de la profondeur TTL pour satisfaire au moins une règle visant à mieux répartir le trafic entre la passerelle et au moins une autre passerelle voisine de cette passerelle.

Dans un mode particulier de réalisation, le procédé de gestion selon l'invention comporte une étape de diminution de la profondeur TTL et d'une durée entre deux diffusions successives du message d'annonce si l'activité des noeuds du réseau ad hoc diminue.

Selon un troisième aspect, l'invention concerne un noeud d'un réseau ad hoc. Ce noeud comporte :

- des moyens pour vérifier si ce noeud est situé à un saut d'une passerelle entre le réseau ad hoc et un réseau fixe et s'il possède une connectivité avec cette passerelle supérieure à un seuil prédéterminé ; et
- des moyens pour demander son enregistrement auprès de la passerelle en tant que « noeud passerelle » pour relayer au moins une partie du trafic entre d'autres noeuds du réseau ad hoc et la passerelle.

Corrélativement l'invention concerne un procédé de transfert de données pouvant être mis en oeuvre par un noeud d'un réseau ad hoc. Ce procédé de transfert comporte :

- une étape au cours de laquelle ce noeud vérifie s'il est situé à un saut d'une passerelle entre le réseau ad hoc et un réseau fixe et s'il possède une connectivité avec cette passerelle supérieure à un seuil prédéterminé; et si c'est le cas :
- une étape de demande d'enregistrement de ce noeud auprès de la passerelle en tant que « noeud passerelle » pour relayer au moins une partie du trafic entre d'autres noeuds du réseau ad hoc et cette passerelle.

Les avantages et caractéristiques particulières du noeud et du procédé de transfert selon l'invention sont les mêmes que ceux mentionnés précédemment.

Ainsi, dans un mode particulier de réalisation, le procédé de transfert selon l'invention comporte :

- une étape de réception d'un message d'annonce comportant une route vers la passerelle ; et
- une étape de rediffusion du message d'annonce dans le réseau ad hoc par chacun des noeuds si ce noeud est situé dans une zone proactive du réseau définie par une profondeur fixée par cette passerelle.

Dans un mode particulier de réalisation, le procédé de transfert selon l'invention comporte en outre une étape d'extension de la zone proactive, au cours de laquelle le noeud rediffuse le message d'annonce, si ce noeud connaît au moins une source active dans le réseau ad hoc séparée de la passerelle par un nombre de sauts supérieur à la profondeur TTL.

Dans un mode particulier de réalisation, le procédé de transfert selon l'invention comporte une étape au cours de laquelle le noeud, ayant reçu plusieurs messages d'annonce, renonce à la rediffusion d'au moins un de ces messages d'annonce si celui-ci est reçu en provenance d'un noeud passerelle offrant une qualité de service relativement faible.

Dans un mode particulier de réalisation, le procédé de transfert selon l'invention comporte :

- si ledit noeud est enregistré en tant que « noeud passerelle », une étape d'insertion dans le message d'annonce d'une mesure de la qualité du lien entre ce noeud passerelle et la passerelle; et dans tous les cas :
- une étape de maintien d'une mesure représentative de la qualité de chaque chemin existant entre ce noeud et un noeud passerelle ; et
- une étape de sélection en fonction de ces mesures, de l'un de ces chemins, pour router le trafic vers la passerelle.

L'invention vise aussi un système de découverte d'une passerelle et de routage de données vers cette passerelle. Ce système comporte au moins une passerelle et une pluralité de noeuds tels que mentionnés ci-desus.

Dans un mode particulier de réalisation, les différentes étapes du procédé de gestion et/ou du procédé de transfert de données sont déterminées par des instructions de programmes d'ordinateurs.

En conséquence, l'invention vise aussi un programme d'ordinateur sur un support d'informations, ce programme étant susceptible d'être mis en oeuvre dans une passerelle ou plus généralement dans un ordinateur, ce programme comportant des instructions adaptées à la mise en oeuvre des étapes d'un procédé de gestion tel que décrit ci-dessus.

Et l'invention vise aussi un programme d'ordinateur sur un support d'informations, ce programme étant susceptible d'être mis en oeuvre dans un noeud ou plus généralement dans un ordinateur, ce programme comportant des instructions adaptées à la mise en oeuvre des étapes d'un procédé de transfert de données tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un réseau hybride dans lequel on peut mettre en oeuvre un procédé de routage conforme à l'invention ;
- la figure 2 représente, de façon schématique une passerelle conforme à l'invention dans un mode particulier de réalisation de l'invention ;
- la figure 3 représente, de façon schématique un noeud conforme à l'invention dans un mode particulier de réalisation de selon l'invention ;
- la figure 4 représente, sous forme d'organigramme, les principales étapes d'un procédé de gestion conforme à l'invention ; et
- la figure 5 représente, sous forme d'organigramme, les principales étapes d'un procédé de transfert de données conforme à l'invention.

Description détaillée d'un mode de réalisation

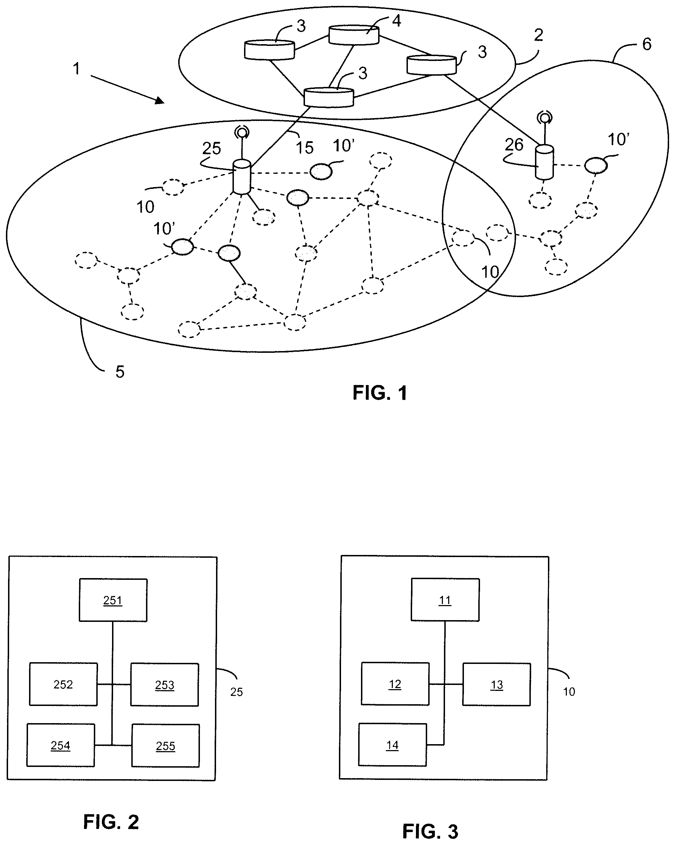

La **figure 1** représente de façon schématique, un réseau hybride 1 dans lequel on peut mettre en oeuvre un procédé de routage conforme à l'invention.

Ce réseau hybride 1 est constitué par un réseau d'infrastructure fixe référencé 2 et par deux réseaux ad hoc référencés 5 et 6.

Dans l'exemple de réalisation décrit ici, le réseau d'infrastructure fixe 2 est le réseau Internet.

Les réseaux ad hoc 5 et 6 sont respectivement définis par une passerelle 25, 26 connectée à une entité 3 du réseau Internet 2.

Dans le réseau Internet 2, on a référencé 4 une entité apte à mettre en oeuvre une bonne répartition du trafic entre les passerelles 25 et 26.

A la figure 1, les liaisons sans fil établies entre les noeuds mobiles au sein d'un réseau ad hoc 5, 6, et entre certains de ces noeuds et les passerelles 25, 26, sont représentées en traits pointillés.

On a représenté en gris les noeuds 10 compris dans les zones proactives de chacun des réseaux ad hoc 5 et 6.

Dans l'exemple décrit ici, les zones proactives des réseaux ad hoc 5 et 6 ont respectivement une profondeur égale à 2 et 3.

Par ailleurs les noeuds 10 des réseaux ad hoc 5,6 enregistrés auprès des passerelles 25, 26 en tant que noeuds passerelles sont représentés avec un contour en trait plein et référencés 10'.

On remarque que ces noeuds passerelles sont tous situés à un saut de la passerelle 25, 26 auprès de laquelle ils sont enregistrés.

On remarque aussi que tous les noeuds situés à un saut d'une passerelle ne sont pas enregistrés en tant que noeud passerelle.

Dans l'exemple de la figure 1, les réseaux ad hoc 5 et 6 se recouvrent partiellement. Mais chacun des noeuds 10 situés dans cette zone de recouvrement connaît une ou plusieurs routes vers une seule des passerelles 25, 26 pour accéder au réseau internet 2.

Conformément à l'invention, l'entité 4 du réseau Internet 2 peut envoyer des requêtes aux passerelles 25, 26 pour leur demander d'ajuster leurs zones proactives respectives, ceci afin de mieux répartir le trafic entre ces passerelles.

La **figure 2** représente, de façon schématique la passerelle 25. Cette passerelle est conforme à un mode particulier de réalisation de l'invention.

Dans l'exemple décrit ici, la passerelle 25 a l'architecture conventionnelle d'un ordinateur.

Elle comporte notamment un processeur 251, une mémoire vive de type RAM 252 et une mémoire morte de type ROM 253.

La mémoire vive 252 comporte une table topologique dans laquelle sont enregistrés les noeuds passerelles 10'.

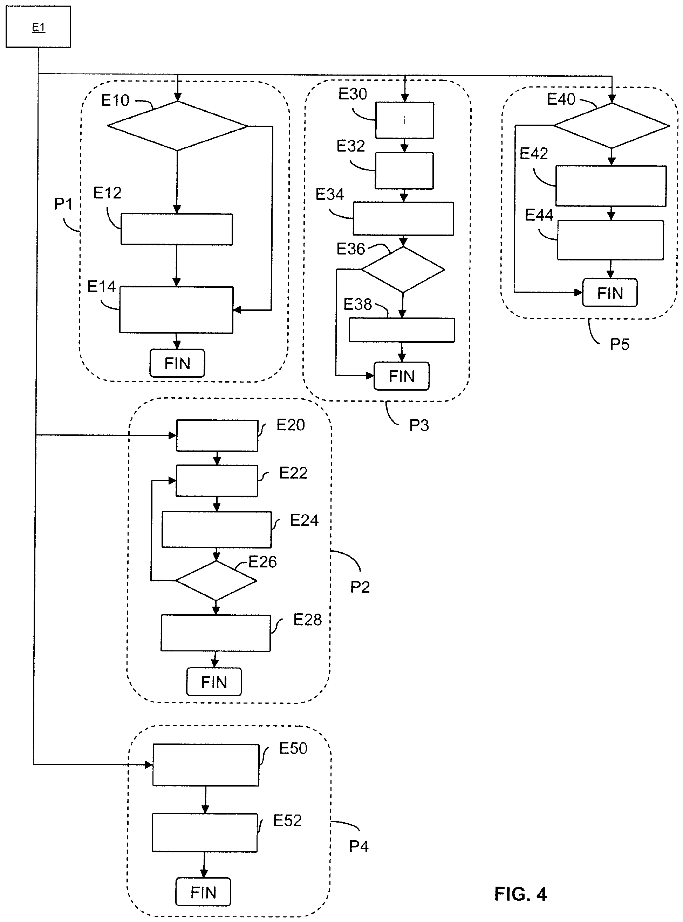

La mémoire morte 253 comporte un programme d'ordinateur conforme à l'invention, ce programme comportant des instructions pour exécuter les étapes du procédé de gestion conforme à l'invention, ces étapes étant représentées sur l'organigramme de la figure 4.

La passerelle 25 comporte également des moyens de communication 254 adaptés à communiquer avec une entité 3 du réseau Internet 2 et des moyens de communication sans fil 255 pour communiquer avec les noeuds du réseau ad hoc 10, 10'.

La **figure 3** représente, de façon schématique un noeud 10, 10'. Ce noeud est conforme à un mode particulier de réalisation de l'invention.

Dans l'exemple décrit ici, les noeuds 10, 10' sont identiques. Ils ont l'architecture conventionnelle d'un ordinateur.

Ils comportent notamment un processeur 11 une mémoire vive de type RAM 12 et une mémoire morte de type ROM 13.

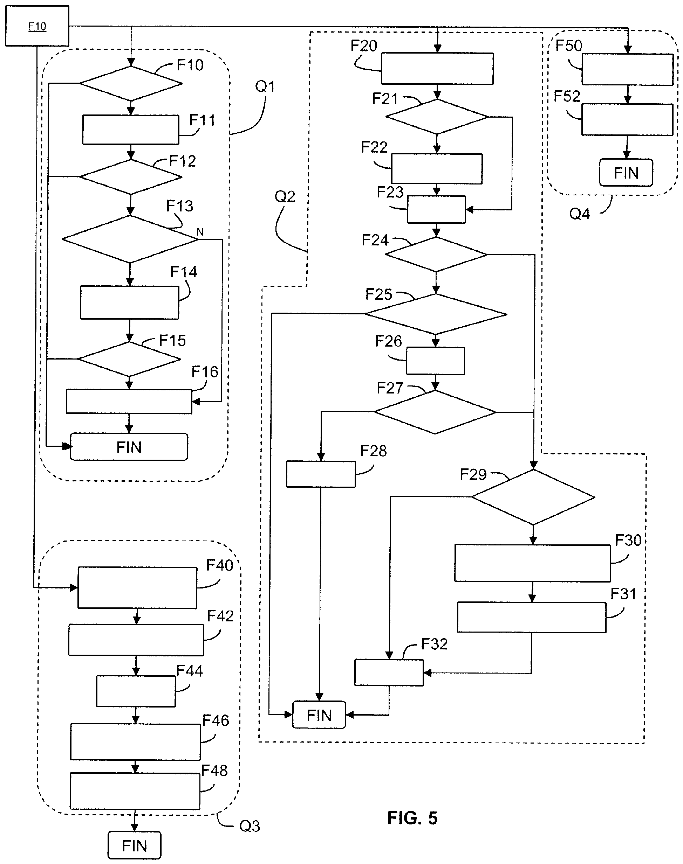

Cette mémoire morte 13 comporte un programme d'ordinateur conforme à l'invention, ce programme comportant des instructions pour exécuter les étapes du procédé de transfert de données conforme à l'invention, ces étapes étant représentées sur l'organigramme de la figure 5.

Les noeuds 10, 10' comportent également des moyens de communication sans fil 14 pour communiquer avec les autres noeuds du réseau ad hoc 10, 10' et les passerelles 25, 26.

Nous allons maintenant décrire un procédé de routage conforme à l'invention mis en oeuvre dans le réseau hybride 1.

Dans le mode de réalisation décrit ici, ce procédé de routage est réparti sur les passerelles 25, 26 et sur les noeuds 10, 10'.

La part du procédé de routage mise en oeuvre par une passerelle 25, 26 correspond au procédé de gestion conforme à l'invention mis en oeuvre par cette passerelle.

Et la part du procédé de routage mise en oeuvre par un noeud 10, 10' correspond au procédé de transfert de données conforme à l'invention mis en oeuvre par ce noeud.

En référence à la **figure 4,** le procédé de gestion de réseau décrit ici, comporte une étape générale E1 apte à gérer cinq processus :

- processus P1 : enregistrement des noeuds passerelles 10' dans la table topologique mémorisée dans la mémoire vive 252 ;
- processus P2 : détermination de la profondeur TTL ;
- processus P3 : détermination de la durée Si d'attente entre deux diffusions successives du message d'annonce par la passerelle ;
- processus P4 : ajustement de la profondeur TTL sur réception d'une requête émise par l'entité 3 du réseau Internet 2 ; et
- processus P5 : diffusion du message d'annonce.

En référence à la **figure 5,** le procédé de transfert de données décrit ici, comporte une étape générale F1 apte à gérer quatre processus :

- processus Q1 : enregistrement des noeuds passerelles 10' dans la table topologique d'une passerelle ;
- processus Q2 : traitement sur réception d'un message d'annonce ;
  reçu par détermination de la profondeur TTL ;
- processus Q3 : routage de données reçues d'une source active ;
- processus Q4 : détection de la fin de l'activité d'une source active.

Nous allons maintenant décrire les processus P1 et Q1 pour l'enregistrement des noeuds passerelles 10' dans la table topologique d'une passerelle 25, 26.

Chaque noeud 10 d'un réseau ad hoc vérifie, au cours d'une étape F10 s'il est candidat pour être un noeud passerelle. Ceci peut être effectué en vérifiant un paramètre de configuration de ce noeud.

Si un noeud n'est pas candidat, le processus Q1 se termine.

En revanche, si un noeud 10 est candidat, ce noeud 10 calcule, au cours d'une étape F11, un rapport signal/bruit à partir d'un message de beacon reçu d'une passerelle 25, 26 pour évaluer sa connectivité avec cette passerelle.

Ce rapport signal/bruit est comparé à un seuil au cours d'une étape F12.

Si le rapport signal/bruit est inférieur à ce seuil, le processus Q1 se termine.

Dans le cas contraire, le noeud 10 vérifie au cours d'une étape F13 si la sélection des noeuds passerelles est faite de façon centralisée ou non.

Si la sélection est distribuée, le noeud 10 envoie, au cours d'une étape F16, une demande d'enregistrement à la passerelle concernée pour qu'elle procède à l'enregistrement de ce noeud dans sa table topologique.

Au contraire, si la sélection est centralisée, le noeud 10 envoie, au cours d'une étape F14, une demande d'autorisation à la passerelle concernée. Puis, dans une étape F15, le noeud 10 traite la réponse de la passerelle. Si la passerelle refuse l'enregistrement, le processus Q1 se termine. Et si la passerelle accepte, le noeud 10 envoie, au cours de l'étape F16 déjà décrite, la demande d'enregistrement à la passerelle concernée pour qu'elle procède à l'enregistrement de ce noeud dans sa table topologique.

L'étape F16 d'envoi de la demande d'enregistrement termine le processus Q1.

Lorsqu'une passerelle reçoit une demande d'autorisation en provenance d'un noeud 10, elle vérifie, au cours d'une étape E10 si la sélection des noeuds passerelles est centralisée. Si tel n'est pas le cas, elle enregistre le noeud 10 dans sa table topologique au cours d'une étape E14.

Si tel est le cas, elle envoie, au cours d'une étape E12 une réponse à cette demande d'autorisation représentative d'une acceptation ou d'un rejet.

Lorsqu'une passerelle reçoit un ordre express d'enregistrement, soit par ce que la sélection se fait de façon distribuée, soit parce qu'elle a précédemment répondu positivement à une demande d'autorisation à cet effet, elle procède à l'enregistrement comme décrit précédemment en référence à l'étape E14.

Nous allons maintenant décrire le processus P2 utilisé par une passerelle 25, 26 pour déterminer la profondeur TTL. Dans cet exemple la profondeur est déterminée afin de maximiser un gain prenant en compte le nombre de sources actives dans la zone proactive, et un critère de coût.

Au cours d'une étape E20, la passerelle initialise une variable t à zéro.

Au cours d'une étape E22, cette variable t est incrémentée.

Puis un gain $\delta(1)$ défini par le rapport entre le nombre $S_c(t)$ de sources actives situées dans la zone proactive de profondeur t et un coût $C_f(t)$ de maintien de cette zone proactive est calculé au cours d'une étape E24.

Dans le mode de réalisation décrit ici, $C_f(t)$ est égal à la somme, pour toutes les sources actives dans la zone, du nombre de sauts séparant cette source active dans la passerelle.

Par exemple, s'il y a seulement deux sources actives dans une zone proactive de rayon 10, respectivement séparées de trois et quatre sauts de la passerelle, le coût de maintien $C_f(t)$ de cette zone est égal à 7.

Au cours d'une étape E26, on vérifie si la variable t est égale à la profondeur maximale autorisée.

Si tel n'est pas le cas, on réitère les étapes E22 à E26 pour calculer les gains $\delta(t)$ pour toutes les profondeurs t autorisées.

Puis au cours d'une étape E28, on choisit la valeur TTL de façon à maximiser le gain $\delta(TTL)$.

Cette étape termine le processus P2.

Nous allons maintenant décrire le processus P3 utilisé par une passerelle 25, 26 pour déterminer la durée Si d'attente entre deux diffusions successives du message d'annonce par la passerelle.

Au cours d'une étape E30, la passerelle calcule une activité Ai définie par le rapport entre le nombre S de sources actives et le nombre total de noeuds.

En variante, le nombre moyen de sauts $H_{avg}$ de sauts séparant ces sources de la passerelle peut aussi être pris en compte :

$$ AI \leftarrow \Omega \times \frac{S}{N} + (1 - \Omega) \times \frac{H_{avg}}{H_{max}} $$

où $H_{max}$ est un nombre maximum de sauts séparant une source active et la passerelle et $\Omega$ un poids compris entre 0.6 et 1.

Au cours d'une étape E32, la passerelle calcule une mobilité Mi définie par le rapport entre le nombre M de noeuds s'étant déplacés dans le réseau ad hoc pendant un intervalle de temps et le nombre N total de noeuds. Les noeuds qui rejoignent ou quittent le réseau ad hoc pendant cette période peuvent aussi être considérés comme des noeuds mobiles.

Puis, la passerelle détermine, dans une étape E34, la durée Si en fonction de l'activité Ai et de la mobilité Mi par exemple par lecture dans une table indexée par ces valeurs.

Au cours d'un test E36, la passerelle vérifie si l'activité Ai a diminué. Si tel est le cas elle diminue les valeurs TTL et Si au cours d'une étape E38.

Le test E36 ou l'étape E36 de diminution des valeurs TTL et Si termine le processus P3.

Dans le processus P4 mis en oeuvre régulièrement par l'étape générale E1, une passerelle 25, 26 vérifie au cours d'une étape E50 si elle a reçu une requête en provenance de l'entité 3 du réseau Internet 2 pour ajuster la profondeur TTL afin de mieux répartir le trafic entre les différentes passerelles. Si tel n'est pas le cas, le processus P4 se termine.

Si une telle requête a été reçue, la passerelle ajuste la valeur TTL au cours d'une étape E52 qui termine ce processus.

Le processus P5 est utilisé par la passerelle 25, 26 pour diffuser les messages d'annonce.

Au cours d'un test E40, la passerelle vérifie que la durée Si s'est écoulée depuis la dernière diffusion de ce message d'annonce.

Si tel est le cas, la passerelle prend en compte une éventuelle demande d'ajustement de la profondeur TTL (étape E42) puis diffuse le message d'annonce, au cours d'une étape E44 à destination de tous les noeuds passerelles à enregistrer dans sa table de topologie.

Cette diffusion termine le processus P5.

Nous allons maintenant décrire en référence à la figure 5, le processus Q2 mis en oeuvre par un noeud sur réception d'un message d'annonce.

Nous supposerons qu'un noeud reçoit un message d'annonce, soit en provenance d'une passerelle (si ce noeud est un noeud passerelle), soit en provenance d'un autre noeud au cours d'une étape F20.

Au cours d'un test F21, le noeud détermine s'il est enregistré en tant que noeud passerelle dans la table de topologie de la passerelle à l'origine de la diffusion du message. Si tel est le cas, le noeud insère dans ce message, au cours d'une étape F22, une mesure L-QoS de la qualité du lien entre cette ce noeud passerelle et la passerelle.

Les étapes suivantes du processus Q2 sont mises en oeuvre que le noeud soit un noeud passerelle ou pas.

Au cours d'une étape F23, le noeud décrémente d'une unité la valeur de la profondeur TTL comprise dans le message d'annonce.

Puis au cours d'un test F24, le noeud détermine si la valeur TTL ainsi obtenue est strictement positive.

Si tel est le cas, cela signifie que l'on se trouve encore dans la zone proactive.

Au cours d'un test F29, le noeud vérifie s'il a déjà reçu le message d'invitation en provenance d'autre noeuds passerelles. Si tel n'est pas le cas, il diffuse le message d'invitation dans le réseau ad hoc au cours d'une étape F32.

Si tel est le cas, le noeud renonce, dans le mode de réalisation décrit ici, à rediffuser le ou les messages d'annonce reçus en provenance de certains noeuds passerelles.

Pour cela, le noeud détermine au cours d'une étape F30 un paramètre E_QoS représentatif d'une mesure de la qualité de service de bout en bout entre ce noeud et la passerelle, pour tous les chemins possibles.

Dans l'exemple de réalisation décrit ici, ce paramètre E-QoS est obtenu, pour un chemin donné, par combinaison linéaire de la mesure L-QoS représentative de la qualité du lien entre la passerelle et le noeud passerelle et d'une mesure P-QoS de la qualité de service du chemin entre le noeud passerelle et le noeud 10.

La mesure L-QoS est obtenue directement dans le message d'annonce. L'obtention de la mesure P-QoS sera décrite ultérieurement.

Puis au cours d'une étape E31, le noeud renonce à rediffuser les messages d'invitation reçus en provenance des noeuds passerelles offrant une qualité de service E-QoS de bout en bout relativement faible par rapport aux autres.

Les autres messages d'annonce sont diffusés au cours de l'étape E32 déjà décrite.

Si au cours d'un test F24, le noeud détermine que la valeur TTL n'est pas strictement positive, cela signifie qu'il se trouve hors de la zone proactive.

Le noeud vérifie alors, au cours d'un test F25, s'il connaît au moins une source active située hors de cette zone. Dans le mode de réalisation décrit ici, ceci est effectué par lecture d'une table Source_Info, mémorisée dans la mémoire vive 52 de ce noeud et dont la gestion sera décrite ultérieurement.

Si aucune source active hors de la zone proactive n'est connue par le noeud 10, le processus Q2 se termine.

Dans le cas contraire, le noeud 10 fixe la valeur TTL à 1 dans le message d'annonce au cours d'une étape F26.

Avant de diffuser ce message d'annonce pour étendre la zone proactive vers ces sources actives, le noeud détermine, au cours d'un test F27, si l'on est dans un mode d'optimisation de la bande passante ou pas.

Si tel est le cas, le test F27 est suivi par une étape F28 au cours de laquelle le message d'annonce est uniquement envoyé aux noeuds aptes à établir un chemin vers ladite au moins une source active.

Sinon, le message d'annonce est diffusé dans le réseau comme déjà décrit, en prenant éventuellement en compte la réception du même message d'annonce en provenance de plusieurs noeuds passerelles.

Nous allons maintenant décrire le processus Q3 mis en oeuvre par un noeud du réseau ad hoc pour router les données reçues d'une source active.

Ces données sont reçues par le noeud considéré au cours d'une étape F40.

Au cours d'une étape F42, ce noeud met à jour sa table Source_Liste en mémorisant, dans cette table, la source à l'origine de ces données et le nombre de sauts qui séparent cette source de la passerelle. Comme décrit précédemment, cette table sera utilisée par le noeud pour vérifier s'il connaît ou non des sources actives en dehors de la zone proactive.

Puis au cours d'une étape F44, le noeud 10 met à jour la mesure de qualité E-QoS de tous les chemins possibles entre cette source et un noeud passerelle connu de ce noeud. Comme décrit précédemment, cette mesure sera utilisée ultérieurement pour renoncer à diffuser un message d'annonce provenant d'un noeud passerelle offrant une qualité E-QoS de bout en bout relativement faible.

Le noeud sélectionne ensuite le meilleur chemin vers la passerelle au cours d'une étape F46, puis route les données dans ce chemin au cours d'une étape F48.

Cette étape de routage termine le processus Q3.

Dans le mode de réalisation décrit ici, chaque noeud surveille en outre l'activité des sources déclarées actives dans sa table Source_Info au cours d'un processus Q4.

Plus précisément, lorsqu'un noeud détecte, au cours d'une étape F50, qu'une source qui était active ne l'est plus, il la supprime de sa table Source_Info au cours d'une étape F52.

## Revendications

**1.** Procédé de gestion d'un réseau de télécommunication hybride (1), pouvant être mis en oeuvre par une passerelle (25) entre un réseau ad hoc (5) et un réseau fixe (2), ce procédé comportant une étape (E14) de sélection parmi des noeuds (10) candidats dudit réseau (5) ad hoc situés à un saut de ladite passerelle (25) et ayant une connectivité avec ladite passerelle (25) supérieure à un seuil prédéterminé, d'au moins un noeud (10') dit " noeud passerelle " pour relayer (F48) au moins une partie du trafic entre d'autres noeuds (10) du réseau ad hoc (5) et ladite passerelle (25), ledit procédé comportant une étape (E44) de diffusion uniquement à destination dudit au moins un noeud passerelle (10'), d'un message d'annonce (GWADV) comportant une route vers ladite passerelle (25), ladite diffusion étant effectuée par ladite passerelle (25), ledit procédé étant **caractérisé en ce qu'**il comporte une étape (E34) de calcul d'une durée (Si) prenant en compte une activité (Ai) et une mobilité (Mi) des noeuds (10) dudit réseau ad hoc (5), et une étape (E40) d'attente de ladite durée (Si) entre deux diffusions (E44) successives dudit message d'annonce (GWADV).

**2.** Procédé de gestion selon la revendication 1, **caractérisé en ce qu'**il comporte une étape (E28) de détermination d'une profondeur (TTL) définissant une zone proactive dudit réseau, afin de maximiser un gain ($\delta(t)$) prenant en compte le nombre (Sc(t)) de sources (10) actives dans ladite zone proactive, et un critère de coût (Cf(t)).

**3.** Procédé de gestion selon la revendication 2, **caractérisé en ce qu'**il comporte une étape (E52) d'ajustement de ladite profondeur (TTL) pour satisfaire au moins une règle visant à mieux répartir ledit trafic entre ladite passerelle (25) et au moins une autre passerelle (26) voisine de ladite passerelle (25).

**4.** Procédé de gestion selon la revendication 2, **caractérisé en ce qu'**il comporte une étape (E38) de diminution de ladite profondeur (TTL) et d'une durée (Si) entre deux diffusions (E44) successives dudit message d'annonce (GWADV) si l'activité (AI) des noeuds (10) dudit réseau ad hoc (5) diminue (E36).

**5.** Programme d'ordinateur comportant des instructions pour l'exécution des étapes du procédé de gestion selon la revendication 1 lorsque ledit programme est exécuté par un ordinateur.

6. Support d'enregistrement lisible par un ordinateur sur lequel est enregistré un programme d'ordinateur comprenant des instructions pour l'exécution des étapes du procédé de gestion selon la revendication 1.

7. Passerelle (25) pouvant être utilisée dans un réseau de télécommunication hybride (1) entre un réseau ad hoc (5) et un réseau fixe (2), la passerelle comportant des moyens (251) de sélection, parmi des noeuds (10) candidats dudit réseau (5) ad hoc situés à un saut de ladite passerelle (25) et ayant une connectivité avec ladite passerelle (25) supérieure à un seuil prédéterminé, d'au moins un noeud (10') dit " noeud passerelle " pour relayer (F48) au moins une partie du trafic entre d'autres noeuds (10) du réseau ad hoc (5) et ladite passerelle (25), ladite passerelle comportant des moyens pour diffuser uniquement à destination dudit au moins un noeud passerelle (10'), un message d'annonce (GWADV) comportant une route vers ladite passerelle (25), des moyens pour calculer une durée (Si) prenant en compte une activité (Ai) et une mobilité (Mi) des noeuds (10) dudit réseau ad hoc (5), ladite passerelle étant configurée pour attendre ladite durée (Si) entre deux diffusions (E44) successives dudit message d'annonce (GWADV).

8. Procédé pouvant être mis en oeuvre dans un réseau de télécommunication hybride (1) par un système de découverte d'une passerelle et de routage de données vers cette passerelle, ledit système comportant au moins ladite passerelle (25), celle-ci étant située entre un réseau ad hoc (5) et un réseau fixe et une pluralité de noeuds (10) dans ledit réseau ad hoc (5) et dans lequel :

    - ladite passerelle met en oeuvre un procédé de gestion selon l'une quelconque des revendications 1 à 4 ;
    - chacun desdits noeuds (10) met en oeuvre un procédé de transfert comportant :
    - une étape (F10, F14) au cours de laquelle ledit noeud vérifie s'il est situé à un saut de ladite passerelle (25) entre ledit réseau ad hoc (5) et ledit réseau fixe (2) et s'il possède une connectivité avec ladite passerelle (25) supérieure à un seuil prédéterminé ; et si c'est le cas :
    - une étape (F16) de demande d'enregistrement dudit noeud (10) auprès de ladite passerelle (25) en tant que " noeud passerelle " pour relayer (F48) au moins une partie du trafic entre d'autres noeuds (10) du réseau ad hoc (5) et ladite passerelle (25).

9. Procédé selon la revendication 8, **caractérisé en ce que** ledit procédé de transfert comporte :

    - une étape (F20) de réception d'un message d'annonce (GWADV) comportant une route vers ladite passerelle (25) ; et
    - une étape (F32) de rediffusion dudit message d'annonce (GWADV) dans ledit réseau ad hoc (5) si ledit noeud (10) est situé dans une zone proactive dudit réseau définie par une profondeur (TTL) fixée par ladite passerelle (25).

10. Procédé selon la revendication 9, **caractérisé en ce que** ledit procédé de transfert comporte en outre une étape d'extension de ladite zone proactive, au cours de laquelle ledit noeud (10) rediffuse (F28, F32) ledit message d'annonce (GWADV), si ce noeud (10) connaît (F25) au moins une source active (10) dans ledit réseau ad hoc (5) séparée de ladite passerelle (25) par un nombre de sauts supérieur à ladite profondeur (TTL).

11. Procédé selon la revendication 9 ou 10, **caractérisé en ce que** ledit procédé de transfert comporte une étape au cours de laquelle ledit noeud (10), ayant reçu plusieurs desdits messages d'annonce (GWADV), renonce (F31) à la rediffusion d'au moins un desdits messages d'annonce (GWADV) si celui-ci est reçu en provenance d'un noeud passerelle (10') offrant une qualité de service inférieure à un seuil prédéterminé.

12. Procédé selon la revendication 9, **caractérisé en ce que** ledit procédé de transfert comporte :

    - si ledit noeud est enregistré en tant que " noeud passerelle ", une étape (F22) d'insertion dans ledit message d'annonce (GWADV) d'une mesure (L-QoS) de la qualité du lien entre ce noeud passerelle (10') et ladite passerelle (25) ; et dans tous les cas :
    - une étape (F44) de maintien d'une mesure (P-QoS) représentative de la qualité d'au moins certains chemins existant entre ce noeud (10) et ledit au moins un noeud passerelle (11') ; et
    - une étape (F46) de sélection en fonction desdites mesures (L-QoS, P-QoS), de l'un desdits chemins, pour router le trafic vers ladite passerelle (25).

13. Système de découverte d'une passerelle et de routage de données vers cette passerelle dans un réseau de télécommunication hybride (1) comportant au moins :

    - une passerelle pouvant être utilisée dans ledit réseau de télécommunication hybride (1) entre un réseau ad hoc (5) et un réseau fixe (2), ladite passerelle étant selon la revendication 7 ; et
- une pluralité de noeuds (15) dans ledit réseau ad hoc (5), lesdits noeuds comportant :
- des moyens (11) pour vérifier si ledit noeud est situé à un saut de ladite passerelle (25) entre ledit réseau ad hoc (5) et ledit réseau fixe (2) et s'il possède une connectivité avec ladite passerelle (25) supérieure à un seuil prédéterminé; et
- des moyens pour demander son enregistrement auprès de ladite passerelle (25) en tant que " noeud passerelle " pour relayer (F48) au moins une partie du trafic entre d'autres noeuds (10) du réseau ad hoc (5) et ladite passerelle (25).

**Patentansprüche**

1. Verfahren zur Verwaltung eines Hybrid-Telekommunikationsnetzes (1), das durch ein Gateway (25) zwischen einem Ad-hoc-Netz (5) und einem Festnetz (2) eingesetzt werden kann, wobei dieses Verfahren einen Schritt (E14) der Auswahl unter Knotenkandidaten (10) des Ad-hoc-Netzes (5), die sich an einem Sprung des Gateways (25) befinden und eine Konnektivität mit dem Gateway (25) über einer vorbestimmten Schwelle haben, mindestens eines Knotens (10'), "Gateway-Knoten" genannt, umfasst, um mindestens einen Teils des Verkehrs zwischen anderen Knoten (10) des Ad-hoc-Netzes (5) und dem Gateway (25) weiterzuleiten (F48), wobei das Verfahren einen Schritt (E44) der Verbreitung nur in Richtung mindestens eines Gateway-Knotens (10') einer Ankündigungsnachricht (GWADV) umfasst, umfassend eine Route zu dem Gateway (25), wobei die Verbreitung durch das Gateway (25) erfolgt, wobei das Verfahren **dadurch gekennzeichnet ist, dass** es einen Schritt (E34) der Berechnung einer Dauer (Si), die eine Aktivität (Ai) und eine Mobilität (Mi) der Knoten (10) des Ad-hoc-Netzes (5) berücksichtigt, und einen Schritt (E40) des Abwartens der Dauer (Si) zwischen zwei aufeinanderfolgenden Verbreitungen (E44) der Ankündigungsnachricht (GWADV) umfasst.

2. Verwaltungsverfahren nach Anspruch 1, **dadurch gekennzeichnet, dass** es einen Schritt (E28) der Bestimmung einer Tiefe (TTL), die eine proaktive Zone des Netzes definiert, umfasst, um einen Gewinn ($\delta$(t)) zu maximieren, der die Anzahl (Sc(t)) von aktiven Quellen (10) in der proaktiven Zone und ein Kostenkriterium (Cf(t)) berücksichtigt.

3. Verwaltungsverfahren nach Anspruch 2, **dadurch gekennzeichnet, dass** es einen Schritt (E52) der Einstellung der Tiefe (TTL) umfasst, um mindestens einer Regel zu entsprechen, die darauf abzielt, den Verkehr zwischen dem Gateway (25) und mindestens einem weiteren, zum Gateway (25) benachbarten Gateway (26) besser zu verteilen.

4. Verwaltungsverfahren nach Anspruch 2, **dadurch gekennzeichnet, dass** es einen Schritt (E38) der Verringerung der Tiefe (TTL) und einer Dauer (Si) zwischen zwei aufeinanderfolgenden Verbreitungen (E44) der Ankündigungsnachricht (GWADV) umfasst, wenn die Aktivität (AI) der Knoten (10) des Ad-hoc-Netzes (5) geringer wird (E36).

5. Computerprogramm, umfassend Anweisungen für die Ausführung der Schritte des Verwaltungsverfahrens nach Anspruch 1, wenn das Programm von einem Computer ausgeführt wird.

6. Aufzeichnungsträger, der von einem Computer lesbar ist, auf dem ein Computerprogramm, umfassend Anweisungen für die Ausführung der Schritte des Verfahrens nach Anspruch 1, aufgezeichnet ist.

7. Gateway (25), das in einem Hybridtelekommunikationsnetz (1) zwischen einem Ad-hoc-Netz (5) und einem Festnetz (2) verwendet werden kann, wobei das Gateway Mittel (251) zur Auswahl unter Knotenkandidaten (10) des Ad-hoc-Netzes (5), die sich an einem Sprung des Gateways (25) befinden und eine Konnektivität mit dem Gateway (25) über einer vorbestimmten Schwelle haben, mindestens eines Knotens (10'), "Gateway-Knoten" genannt, umfasst, um mindestens einen Teil des Verkehrs zwischen anderen Knoten (10) des Ad-hoc-Netzes (5) und dem Gateway (25) weiterzuleiten (F48), wobei das Gateway Mittel zur Verbreitung nur in Richtung mindestens eines Gateway-Knotens (10') einer Ankündigungsnachricht (GWADV), umfassend eine Router zu dem Gateway (25), Mittel zur Berechnung einer Dauer (Si), die eine Aktivität (Ai) und eine Mobilität (Mi) der Knoten (10) des Ad-hoc-Netzes (5) berücksichtigt, umfasst, wobei das Gateway eingerichtet ist, die Dauer (Si) zwischen zwei aufeinanderfolgenden Verbreitungen (E44) der Ankündigungsnachricht (GWADV) abzuwarten.

8. Verfahren, das in einem Hybridtelekommunikationsnetz (1) durch ein System zur Steuerung eines Gateways und zum Routen von Daten zu diesem Gateway eingesetzt werden kann, umfassend mindestens das Gateway (25), wobei dieses zwischen einem Ad-hoc-Netz (5) und einem Festnetz angeordnet ist, und eine Vielzahl von Knoten (10) in dem Ad-hoc-Netz (5), bei dem:

   - das Gateway ein Verwaltungsverfahren nach einem der Ansprüche 1 bis 4 einsetzt;
   - jeder der Knoten (10) ein Transferverfahren einsetzt, umfassend:
   - einen Schritt (F10, F14), während dessen der Knoten überprüft, ob er sich an einem Sprung des Gateways (25) zwischen dem Ad-hoc-Netz (5) und dem Festnetz (2) befindet, und ob er eine Konnektivität mit dem Gateway (25) über einer vorbestimmten Schwelle besitzt; und wenn dies der Fall ist:

- einen Schritt (F16) der Anforderung einer Registrierung des Knotens (10) bei dem Gateway (25) als "Gateway-Knoten", um mindestens einen Teil des Verkehrs zwischen anderen Knoten (10) des Ad-hoc-Netzes (5) und dem Gateway (25) weiterzuleiten (F48).

9. Verfahren nach Anspruch 8, **dadurch gekennzeichnet, dass** das Transferverfahren umfasst:

- einen Schritt (F20) des Empfangs einer Ankündigungsnachricht (GWADV), umfassend eine Route zu dem Gateway (25); und
- einen Schritt (F32) der Wiederholung der Ankündigungsnachricht (GWADV) in dem Ad-hoc-Netz (5), wenn sich der Knoten (10) in einer proaktiven Zone des Netzes befindet, durch eine durch das Gateway (25) festgelegte Tiefe (TTL) definiert ist.

10. Verfahren nach Anspruch 9, **dadurch gekennzeichnet, dass** das Transferverfahren ferner einen Schritt der Erweiterung der proaktiven Zone umfasst, während dessen der Knoten (10) die Ankündigungsnachricht (GWADV) wiederholt (F28, F32), wenn dieser Knoten (10) mindestens eine aktive Quelle (10) in dem Ad-hoc-Netz (5) erkennt (F25), die von dem Gateway (25) durch eine größere Anzahl von Sprüngen als die Tiefe (TTL) getrennt ist.

11. Verfahren nach Anspruch 9 oder 10, **dadurch gekennzeichnet, dass** das Transferverfahren einen Schritt umfasst, während dessen der Knoten (10), der mehrere der Ankündigungsnachrichten (GWADV) erhalten hat, auf die Wiederholung mindestens einer der Ankündigungsnachrichten (GWADV) verzichtet (F31), wenn diese von einem Gateway-Knoten (10') erhalten wird, der eine Dienstleistungsqualität unter einer vorbestimmten Schwelle bietet.

12. Verfahren nach Anspruch 9, **dadurch gekennzeichnet, dass** das Transferverfahren umfasst:

- wenn der Knoten als "Gateway-Knoten" registriert ist, einen Schritt (F22) des Einsetzens in die Ankündigungsnachricht (GWADV) einer Messung (L-QoS) der Qualität der Verbindung zwischen diesem Gateway-Knoten (10') und dem Gateway (25); und in jedem Fall:
- einen Schritt (F44) der Aufrechterhaltung einer Messung (P-QoS), die für die Qualität mindestens gewisser Wege, die zwischen diesem Knoten (10) und dem mindestens einen Gateway-Knoten (11') vorhanden sind, repräsentativ ist; und
- einen Schritt (F46) der Auswahl eines der Wege in Abhängigkeit von den Messungen (L-QoS, P-QoS), um den Verkehr zu dem Gateway (25) zu routen.

13. System zur Steuerung eines Gateways und zum Routen von Daten zu diesem Gateway in einem Hybridtelekommunikationsnetz (1), mindestens umfassend:

- ein Gateway, das in dem Hybridtelekommunikationsnetz (1) zwischen einem Ad-hoc-Netz (5) und einem Festnetz (2) verwendet werden kann, wobei das Gateway nach Anspruch 7 ausgeführt ist; und
- eine Vielzahl von Knoten (15) in dem Ad-hoc-Netz (5), wobei die Knoten umfassen:
- Mittel (11), um zu überprüfen, ob der Knoten an einem Sprung des Gateways (25) zwischen dem Ad-hoc-Netz (5) und dem Festnetz (2) angeordnet ist, und ob er eine Konnektivität mit dem Gateway (25) über einer vorbestimmten Schwelle besitzt; und
- Mittel, um seine Registrierung bei dem Gateway (25) als "Gateway-Knoten" zu beantragen, um mindestens einen Teil des Verkehrs zwischen anderen Knoten (10) des Ad-hoc-Netzes (5) und dem Gateway (25) weiterzuleiten (F48).

## Claims

1. Method for managing a hybrid telecommunication network (1), that can be implemented by a gateway (25) between an ad hoc network (5) and a fixed network (2), this method comprising a step (E14) of selection, from candidate nodes (10) of said ad hoc network (5) situated at one hop from said gateway (25) and having a connectivity with said gateway (25) above a predetermined threshold, of at least one node (10') called "gateway node" for relaying (F48) at least a part of the traffic between other nodes (10) of the ad hoc network (5) and said gateway (25), said method comprising a step (E44) of broadcasting, only to said at least one gateway node (10'), an announcement message (GWADV) comprising a route to said gateway (25), said broadcasting being performed by said gateway (25), said method being **characterized in that** it comprises a step (E34) of computation of a duration (Si) taking into account an activity (Ai) and a mobility (Mi) of the nodes (10) of said ad hoc network (5), and a step (E40) of waiting for said duration (Si) between two successive broadcasts (E44) of said announcement message (GWADV).

**2.** Management method according to Claim 1, **characterized in that** it comprises a step (E28) of determination of a depth (TTL) defining a proactive zone of said network, in order to maximize a gain ($\delta$(t)) taking into account the number (Sc(t)) of active sources (10) in said proactive zone, and a cost criteria (Cf(t)).

**3.** Management method according to Claim 2, **characterized in that** it comprises a step (E52) of adjustment of said depth (TTL) to satisfy at least one rule intended to best distribute said traffic between said gateway (25) and at least one other gateway (26) adjacent to said gateway (25).

**4.** Management method according to Claim 2, **characterized in that** it comprises a step (E38) of reduction of said depth (TTL) and of a duration (Si) between two successive broadcasts (E44) of said announcement message (GWADV) if the activity (AI) of the nodes (10) of said ad hoc network (5) decreases (E36).

**5.** Computer program comprising instructions for the execution of the steps of the management method according to Claim 1 when said program is run by a computer.

**6.** Computer-readable storage medium on which is stored a computer program comprising instructions for the execution of the steps of the management method according to Claim 1.

**7.** Gateway (25) that can be used in a hybrid telecommunication network (1) between an ad hoc network (5) and a fixed network (2), the gateway comprising means (251) for selecting, from candidate nodes (10) of said ad hoc network (5) situated at one hop from said gateway (25) and having a connectivity with said gateway (25) above a predetermined threshold, at least one node (10') called "gateway node" for relaying (F48) at least a part of the traffic between other nodes (10) of the ad hoc network (5) and said gateway (25), said gateway comprising means for broadcasting, only to said at least one gateway node (10'), an announcement message (GWADV) comprising a route to said gateway (25), means for computing a duration (Si) taking into account an activity (Ai) and a mobility (Mi) of the nodes (10) of said ad hoc network (5), said gateway being configured to wait for said duration (Si) between two successive broadcasts (E44) of said announcement message (GWADV).

**8.** Method that can be implemented in a hybrid telecommunication network (1) by a system for discovering a gateway and for routing data to this gateway, said system comprising at least said gateway (25), the latter being situated between an ad hoc network (5) and a fixed network and a plurality of nodes (10) in said ad hoc network (5) and in which:

- said gateway implements a management method according to any one of Claims 1 to 4;
- each of said nodes (10) implements a transfer method comprising:
- a step (F10, F14) during which said node checks to see if it is situated at one hop from said gateway (25) between said ad hoc network (5) and said fixed network (2) and to see if it has a connectivity with said gateway (25) above a predetermined threshold; and if such is the case:
- a step (F16) of requesting registration of said node (10) with said gateway (25) as "gateway node" for relaying (F48) at least a part of the traffic between other nodes (10) of the ad hoc network (5) and said gateway (25).

**9.** Method according to Claim 8, **characterized in that** said transfer method comprises:

- a step (F20) of reception of an announcement message (GWADV) comprising a route to said gateway (25); and
- a step (F32) of rebroadcasting of said announcement message (GWADV) in said ad hoc network (5) if said node (10) is situated in a proactive zone of said network defined by a depth (TTL) set by said gateway (25).

**10.** Method according to Claim 9, **characterized in that** said transfer method further comprises a step of extension of said proactive zone, during which said node (10) rebroadcasts (F28, F32) said announcement message (GWADV), if this node (10) knows (F25) at least one active source (10) in said ad hoc network (5) separated from said gateway (25) by a number of hops greater than said depth (TTL).

**11.** Method according to Claim 9 or 10, **characterized in that** said transfer method comprises a step during which said node (10), having received several of said announcement messages (GWADV), abandons (F31) the rebroadcasting of at least one of said announcement messages (GWADV) if the latter is received from a gateway node (10') offering a quality of service below a predetermined threshold.

**12.** Method according to Claim 9, **characterized in that** said transfer method comprises:

- if said node is registered as "gateway node", a step (F22) of insertion into said announcement message (GWADV) of a measurement (L-QoS) of the quality of the link between this gateway node (10') and said gateway (25); and in all cases:

- a step (F44) of maintaining a measurement (P-QoS) representative of the quality of at least some paths existing between this node (10) and said at least one gateway node (11'); and
- a step (F46) of selection, as a function of said measurements (L-QoS, P-QoS), of one of said paths, for routing the traffic to said gateway (25).

**13.** System for discovering a gateway and for routing data to this gateway in a hybrid telecommunication network (1) comprising at least:

- a gateway that can be used in said hybrid telecommunication network (1) between an ad hoc network (5) and a fixed network (2), said gateway being in accordance with Claim 7; and
- a plurality of nodes (15) in said ad hoc network (5), said nodes comprising:
- means (11) for checking whether said node is situated at one hop from said gateway (25) between said ad hoc network (5) and said fixed network (2) and whether it has a connectivity with said gateway (25) above a predetermined threshold; and
- means for requesting its registration with said gateway (25) as "gateway node" for relaying (F48) at least a part of the traffic between other nodes (10) of the ad hoc network (5) and said gateway (25).

**FIG. 1**

**FIG. 2**

**FIG. 3**

**FIG. 4**

**FIG. 5**